# EUROPÄISCHE PATENTSCHRIFT

(11) **EP 1 192 336 B1**
(45) Veröffentlichungstag und Bekanntmachung des Hinweises auf die Patenterteilung: **13.04.2005**
(21) Anmeldenummer: 00951240.1
(22) Anmeldetag: 29.06.2000
(51) Int. Cl.: F01N 3/035, F01N 3/28, F01N 3/022

(54) **EINRICHTUNG ZUR ABGASBEHANDLUNG**
DEVICE FOR TREATING EXHAUST GAS
UNITE DE TRAITEMENT DE GAZ D'ECHAPPEMENT

(30) Priorität: 29.06.1999 DE 19929911
(43) Veröffentlichungstag der Anmeldung: 03.04.2002
(73) Patentinhaber: Buck, Alfred Ernst, 71149 Bondorf (DE)
(72) Erfinder: Buck, Alfred Ernst, 71149 Bondorf (DE)
(74) Vertreter: Patentanwälte Rüger, Barthelt & Abel
(86) Internationale Anmeldenummer: PCT/DE2000/002037
(87) Internationale Veröffentlichungsnummer: WO 2001/002705

(56) Entgegenhaltungen:
- DE-C- 4 303 850
- US-A- 4 181 514
- US-A- 5 567 392
- US-A- 5 780 811

## Beschreibung

In der DE-C-43 03 850 ist ein Katalysator für den Abgasstrom eines Verbrennungsmotors beschrieben. Der Katalysator besteht aus einem Mineralfasergestrick. Das Gestrick ist zu Lagen angeordnet, indem es entweder leporelloartig gefaltet oder aufgerollt ist. Die Durchströmung des so erhaltenen Körpers erfolgt in Richtung parallel zu den einzelnen Lagen. Die Fasern, aus dem das Gestrick hergestellt ist, sind mit einem entsprechenden Katalysatormaterial, beispielsweise Platin beschichtet.

Der große Vorteil dieser Anordnung besteht in einer hoch wirksamen Reinigung des Abgasstromes, während andererseits bei dem insich nachgiebigen Gestrick nicht die Gefahr der Zerstörung besteht. Da das Gestrick obendrein als Schlauchware hergestellt ist, gibt es keine freie Kanten, an denen sich das Gestrick beginnen kann aufzulösen. Selbst wenn innerhalb des durch das Gestrick gebildeten Körpers Fadenbrüche auftreten sollten, bleibt das Gestrick dennoch in seiner Struktur erhalten, weil der gebrochene Faden wegen der Maschen auf beiden Seiten des Bruchs festgehalten wird.

Eine andere Ausführungsform von Katalysatoren sind sogenannte Monolithe, bei denen eine porös gasdurchlässiger Keramikkörper mit dem Katalysatormaterial beschichtet ist. Diese Keramikkörper haben den Nachteil, gegebenfalls im Abgasstrom zertrümmert zu werden.

Unabhängig von der Art wie der Träger für das Katalysatormaterial ausgebildet ist, zeigen die bekannten Katalysatoren Schwierigkeiten beim Ansprechen im Teillastbereich und bei kleinen Leistungen des Verbrennungsmotors. Der Grund hierfür besteht darin, dass bei diesen kleinen Motorleistungen der Abgasstrom ein zu kleines Volumen hat und nicht in der Lage ist, den Katalysator auf die Prozesstemperatur zu bringen, bei der das Katalysatormaterial in der Lage ist, das Stickoxid zu spalten. Der geringvolumige Abgasstrom wird im Auspuffrohr zu stark gekühlt.

Um bei niedrigen Motorleistungen die Katalyse einwandfrei in Gang setzen zu können, müßte der Katalysator dichter an die Auslassöffnungen des Verbrennungsmotors herangerückt werden, damit die Auskühlung im Auspuffrohr nicht zu stark ist. Das hat hingegen zur Folge, dass bei großen Motorleistungen der Katalysator thermisch zerstört wird. Der Abgasstrom mit großem Volumen wird nicht so stark gekühlt. Bei kurzem Abstand zwischen Auslassöffnung des Zylinders und Katalysator in Verbindung, wie er für den Teillastbereich benötigt wird, würde der Abgasstrom, mit dem großen Massenstrom den Katalysator auf relativ hohe Temperaturen aufheizen, die zufolge des katalytischen Zerfalls des NOₓ noch weiter erhöht werden. Damit werden im Inneren des Katalysators Temperaturen erreicht, die diesen thermisch zerstören oder zumindest das Katalysatormaterial beschädigen.

Grundsätzlich ähnliche Verhältnisse werden bei selbstregenerierenden Rußfiltern angetroffen. Eine zu große Entfernung des Rußfilters von der Auslassöffnung des Zylinders führt im Teillastbereich des Motors zu zu niedrigen Temperaturen. Höhere Temperaturen wären notwendig, damit der Ruß in dem Filter auf katalytische Weise verbrennt. Eine zu kurze Entfernung des Rußfilters von der Auslassöffnung hat bei großen Motorleistungen zu hohe Temperaturen zur Folge.

Ein Filter für Abgase, das zur Selbstreinigung fremd beheizt ist, ist aus der US 5,567,392 bekannt. Diese Anordnung setzt sich aus einem Stapel von Scheiben zusammen. Jede Scheibe hat die Gestalt eines Rings, dessen Wand von einem spiralförmig aufgewickelten Band gebildet ist. Das Band besteht aus einem Glasfasergewebe und einem Gewebe aus Metall. Das Gewebe aus Metall soll als Heizelement dienen, wozu die Enden des Metallbandes jeder Scheibe an eine Stromquelle angeschlossen sind.

Ausgehend hiervon ist es Aufgabe der Erfindung eine Einrichtung zur Abgasbehandlung von Verbrennungsmotoren zu schaffen, die auch im unteren Leistungsbereich bzw. Teillastbereich des Verbrennungsmotors zuverlässig arbeitet, ohne dass die Gefahr besteht, dass sie bei Volllast des Motors thermisch zerstört wird.

Diese Aufgabe wird erfindungsgemäß mit der Einrichtung mit den Merkmalen des Anspruchs 1 gelöst.

Bei der erfindungsgemäßen Einrichtung werden als Trägermaterial für das Katalysatormaterial wiederum textile Flächengebilde verwendet, die lagenweise geschichtet sind. Dabei setzt sich der so gebildete Körper aus zwei unterschiedlichen Arten von Lagen zusammen, nämlich Lagen die ausschließlich aus Draht bestehen, und Lagen die entweder nur aus Mineralfasern oder einer Kombination aus Draht und Mineralfasern gebildet sind. Die ausschließlich aus Draht bestehenden Lagen sind so angeordnet, dass sie auf der Anströmseite ein kurzes Stück, beispielsweise 3 bis 10 mm über die anderen Lagen überstehen.

Draht ist im Verhältnis zu Mineralfasern ein verhältnismäßig sehr guter Wärmeleiter, und es wird davon ausgegangen, dass die vorstehenden Drahtlagen sich im Abgasstrom sehr schnell erwärmen und die hohen Temperaturen in das Innere bzw. zwischen die Lagen aus Mineralfasern transportieren. Dadurch wird die Katalyse in Gang gesetzt und heizt den Katalysator entsprechend weiter auf. Der neue Katalysator kann deswegen in einem Abstand von der Auslassöffnung des Zylinders angeordnet werden, der so groß ist, dass auch bei Volllastbetrieb des Motors nicht die Gefahr einer Überhitzung des Katalysators besteht.

Grundsätzlich ähnliche Verhältnisse liegen wiederum bei einem selbstregenerierenden Rußfilter vor, bei dem mit und ohne katalytische Beschichtung der an dem Draht oder den Fasern niedergeschlagene Ruß abbrennen kann und zwar auch dann, wenn das Fahrzeug nur im Teillastbereich betrieben wird.

Ein gegen mechanische Beschädigungen durch den Abgasstrom sehr widerstandfähiger Gehäuseeinsatz wird erreicht, wenn wenigstens die erste und/oder zweite Lage aus einer Maschenware besteht bzw. bestehen. Unter Maschenware versteht der Fachmann ein Gestrick oder ein Gewirk. Die Maschenware wiederum wird sehr robust, wenn sie als Schlauchware oder Band mit festem Rand hergestellt ist, weil dann zum einen unmittelbar ein doppellagiges Gebilde erzeugt wird und außerdem an den Rändern keine freien Kanten auftreten, an denen die Gefahr besteht, dass sich das Gestrick oder Gewirk beginnen könnte aufzulösen. Die Schlauchware ist in Umfangsrichtung endlos, womit es keine Maschenstäbchen gibt, die nicht zwischen benachbarten Maschenstäbchen eingebunden wären.

Zweckmäßigerweise sind die ersten Lagen unterereinander einstückig mit einander verbunden, wie dies auch für die zweiten Lagen zutrifft. Um dies zu erreichen, wird das Ausgangsmaterial für die erste und für die zweite Lage aufeinander gelegt. Das so erhaltene doppellagige Gebilde wird entweder leporelloartig gefaltet oder aufgerollt. In dem Stapel wechseln sich dann erste und zweite Lagen jeweils ab.

Je nach Art des Verbrennungsmotors, in dem die Einrichtung eingesetzt werden soll, handelt es sich bei dem Katalysatormaterial um Katalysatormaterial für Stickoxid oder um Katalysatormaterial zum Oxidieren von Ruß. Schließlich kann die neue Einrichtung auch als selbstregenerierende Filtereinrichtung für Feinstpartikel dienen, wie sie sowohl am Diesel- als auch am Ottomotor auftreten.

Im übrigen sind Weiterbildungen Gegenstand von Unteransprüchen. In der Zeichnung sind Ausführungsbeispiele des Gegenstandes der Erfindung dargestellt: es zeigen
Fig. 1 die Einrichtung gemäß der Erfindung in einem schematisierten Längsschnitt,
Fig. 2 den Einsatz nach Fig. 1 in einer perspektivischen, schematischen Darstellung und
Fig. 3 eine weitere Ausführungsform für den Einsatz der Einrichtung nach Fig. 1, ebenfalls in einer perspektivischen Ausschnittsdarstellung.

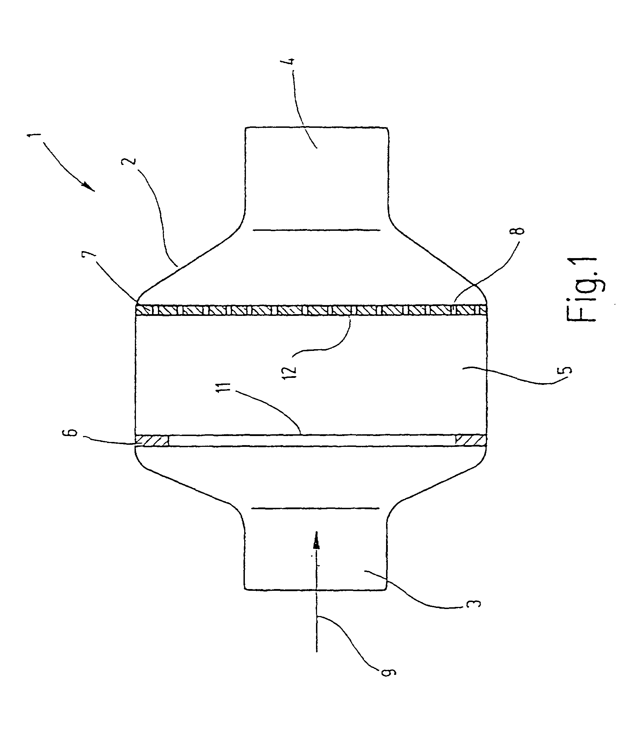

Fig. 1 zeigt eine schematische Form einer Einrichtung 1 zur Behandlung des Abgases eines Verbrennungsmotors, beispielsweise eines Diesel- oder eines Ottomotors.

Die Einrichtung 1 weist ein Gehäuse 2 auf, das mit einem Einlass-Stutzen 3 und mit einem Auslass-Stutzen 4 versehen ist. Der Einlass-Stutzen 3 ist beispielsweise zur Verbindung mit dem Abgaskrümmer des Verbrennungsmotors vorgesehen, während bei 4 das Auspuffrohr angeschlossen wird.

Im Inneren des Gehäuses 2 befindet sich ein Einsatz 5. Der Einsatz 5 füllt, wie gezeigt, den Querschnitt des Innenraums des Gehäuses 2 vollständig aus. Der Einsatz 5 wird auf der dem Einlass-Stutzen 3 zugekehrten Seite durch einen Ringbund 6 gesichert, der an dem Gehäuse 2 befestigt ist. Im Abstand zu dem Ringbund 6 ist eine Lochplatte 7 in dem Gehäuse 2 befestigt, die als Anlagefläche für den Einsatz 5 dient, der verhindern soll, dass der Abgasstrom den Einsatz 5 in Richtung auf den Auslass-Stutzen 4 verschiebt.

Die Lochplatte 7 enthält eine Vielzahl von Löchern 8 und kann auch durch ein engmaschiges Sieb gebildet sein, das an der Innenseite des Gehäuses 2 festgeschweißt ist.

Die Durchströmung der Einrichtung 1 geschieht von dem Einlass-Stutzen 3 zu dem Auslass-Stutzen 4 in Richtung eines Pfeiles 9. Somit entsteht an dem Einsatz 5 eine Anströmseite 11 und eine Abströmseite 12.

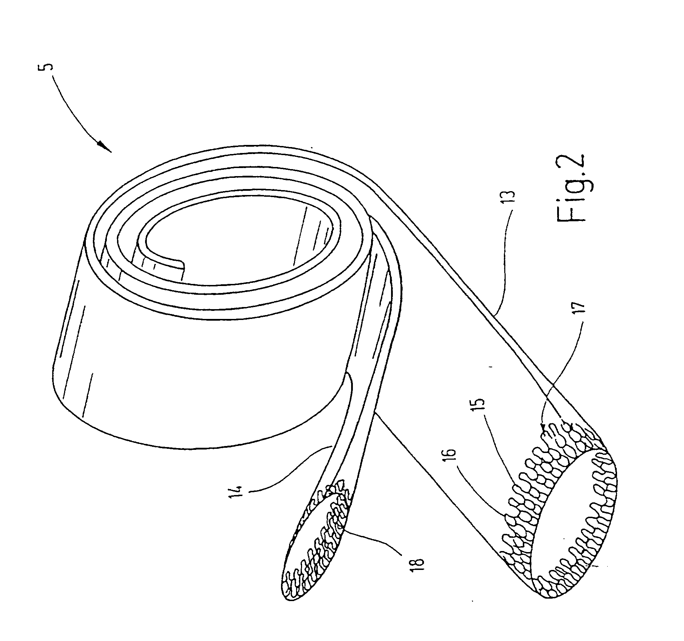

Der Aufbau des Einsatzes 5 ergibt sich aus Fig. 2.

Der Einsatz 5 besteht aus zwei trommelartig aufgewickelten, gestrickten Schläuchen 13 und 14. Der Gestrickschlauch 13 besteht aus Metalldraht 15 der unter Ausbildung von Maschen 16 verstrickt ist. Hierdurch entsteht ein in Umfangsrichtung endloses Gebilde, wobei die durch das Stricken gebildete Maschenstäbchen 17 in Richtung der Mantellinie des gestrickten Schlauches verlaufen. Die Maschenreihen liegen in Umfangsrichtung.

Der zweite Gestrickschlauch 14 besteht ebenfalls aus Maschen 18, wobei die Fäden, aus denen der Gestrickschlauch 18 hergestellt ist, Mineralfasern sind. Diese Mineralfasern sind je nach Anwendungszweck mit einem Katalysatormaterial für Ruß oder einem Katalysatormaterial für NOₓ beschichtet. Außerdem sind im Falle von Glasfasern diese gegebenfalls geliched.

Die erzeugten Warenschläuche 13, 14 sind flach gelegt, wie dies Fig. 2 erkennen lässt und gemeinsam über die Breitseite aufgewickelt. Hierdurch entsteht das in Fig. 2 gezeigte trommelartige Gebilde. Die Weite des Gestrickschlauches 13 im Verhältnis zu der Weite des Gestrickschlauches 14 ist so gewählt, dass, wenn beide Gestrickschläuche 13, 14 flach gedrückt sind, die Breite des Gestrickschlauches 13 aus dem Metalldraht 15 etwas größer ist, als die Breite des Gestrickschlauches 14 aus den Mineralfasern. Dadurch steht der Gestrickschlauch 13 auf der einen Seite des Einsatzes 5 über die Kante des Gestrickschlauches 14 über.

### Die Herstellung des Einsatzes 5 geschieht wie folgt:

Auf entsprechenden Rundstrickmaschinen wird aus Metalldraht 15 der Gestrickschlauch 13 gestrickt. Ebenfalls auf einer Rundstrickmaschine wird aus Mineralfasergarnen der Gestrickschlauch 14 erzeugt. Sodann wird der Gestrickschlauch 14 aus Mineralfasern auf den Gestrickschlauch 13 aus Metalldraht aufgelegt und zwar so, dass der flachgelegte Gestrickschlauch 14 an der einen Kante bündig mit der entsprechenden Kante des flachgelegten Gestrickschlauches 13 aus Metalldraht übereinstimmt.

Wegen der unterscheidlichen Breite steht der Gestrickschlauch 13 aus Metalldraht an der anderen Kante über die Kante des Gestrickschlauches 14 über, wie dies Fig. 2 schematisch erkennen lässt. Sodann wird das zweilagige Gebilde aus den beiden flachliegenden Gestrickschläuchen 13 und 14 über die Breitseite aufgewickelt, wie sich das ebenfalls aus Fig. 2 ergibt. Das Aufwickeln wird solange fortgesetzt, bis ein Wickel mit einem Durchmesser entsteht, der gleich dem Innendurchmesser des Gehäuses 2 ist. Anschließend wird der erzeugte Wickel von dem Vorrat an Gestrickschläuchen 13 und 14 abgeschnitten. Der nun erhaltene Wickel stellt den Einsatz 5 dar, der in dem Gehäuse 2 angeordnet wird. Er wird so in dem Gehäuse 2 platziert, dass diejenige Stirnseite des Wickels, an der der Gestrickschlauch 13 aus Metalldraht übersteht, dem Einlass-Stutzen 3 zugekehrt ist, d.h. die Anströmseite 11 des Einsatzes 5 bildet.

Wie sich aus der Erläuterung der Herstellung ergibt, wechseln, bezogen auf die Radialrichtung des Einsatzes 5, eine erste Lage, gebildet durch den Gestrickschlauch 14 jeweils mit einer zweiten Lage, gebildet aus dem Gestrickschlauch 13 aus Metalldraht, ab. Aufgrund der Anordnung des Wickels bzw. Einsatzes 5 erfolgt die Durchströmung des Einsatzes 5 im Wesentlichen in Richtung parallel zu den etwa zylindrischen Flächen (genau gesagt spiralförmigen), die durch die Lagen der flachgedrückten Gestrickschläuche 13, 14 definiert sind. Die Durchströmung erfolgt, bezogen auf die Hauptrichtung, nämlich die Verbindung zwischen dem Einlass-Stutzen 3 zu dem Auslass-Stutzen 4, etwa in Richtung parallel zu den Maschenreihen 17, wobei bei dieser Definition der Durchströmungsrichtung nur die makroskopische Durchströmung betrachtet wird. Mikroskopisch gesehen kann es durchaus vorkommen, dass auf Grund von Turbulenzen ein Stromfaden durch eine Lage durchführt.

Da der Gestrickschlauch 13 aus dem Metalldraht auf der Anströmseite 11 über den Gestrickschlauch 14 übersteht, ist das Gebilde in diesem Bereich sehr viel lockerer. Außerdem hat der Metalldraht bessere Wärmeleitungseigenschaften als Mineralfasern. Der Metalldraht kann an der Anströmseite sehr viel schneller Wärme aufnehmen, und diese Wärme zwischen die Lagen aus Mineralfasern, nämlich die Lagen, die durch den Gestrickschlauch 14 gebildet sind, transportieren. Hierdurch wird es möglich, auch im Teillastbereich des Motors den Einsatz 5 auf Temperaturen zu bringen, bei denen er seine katalytische Funktion erfüllen kann. Und dies in einem räumlichen Abstand von der Auslassöffnung, die eine thermische Zerstörung des Einsatzes 5 verhindert.

Die katalytische Wirkung lässt sich gegebenenfalls noch steigern, wenn zusätzlich auch der Metalldraht des Gestricksschlauches 13 mit einem Katalysatormaterial beschichtet wird.

Anstatt einen zylindrischen Wickel zu erzeugen, wie er in Fig. 2 gezeigt ist, besteht auch die Möglichkeit einen Wickel zu produzieren, der in der Draufsicht die Gestalt eines Ovals zeigt, so dass die Ausdehnung des daran angepassten Gehäuses 2 in zwei auf einander senkrechtstehenden Richtungen unterschiedlich groß ist. Eine derartige Konfiguration hat beispielsweise Vorteile, wenn die Anordnung unter einem Fahrzeugboden untergebracht werden muss.

Bei dem zuvor erläuterenden Ausführungsbeispiel sind in jedem Falle die beiden Gestrickschläuche 13, 14 aufgewickelt d.h. sie folgen mehr oder weniger einer Spirale.

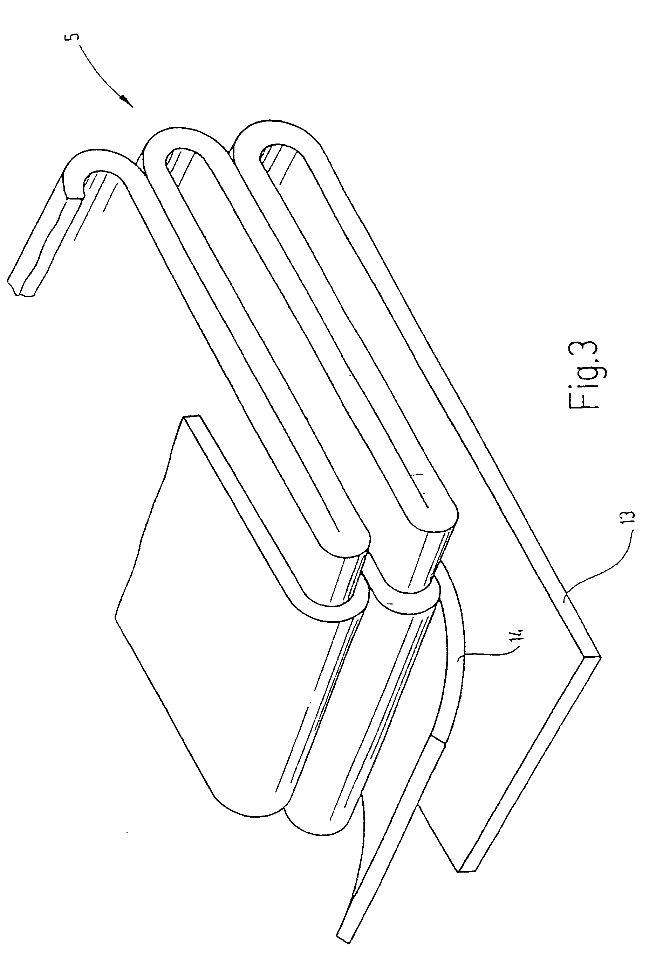

Fig. 3 zeigt eine Ausführungsform, bei der die beiden Gestrickschläuche 13, 14 leporelloartig zu einem Stapel gefaltet sind. Zufolge der leporelloartigen angeordneten Falten liegen jeweils zwei durch den Gestrickschlauch 14 gebildete Lagen unmittelbar aufeinander, worauf in Stapelrichtung gesehen, zwei unmittelbar aufeinander liegende Lagen aus dem Gestrickschlauch 13 folgen. Auch mit einer solchen Konfiguration des Einsatzes 5 kann dieselbe Wirkung erzielt werden, wie mit der Anordnung nach Fig. 2.

Eine Einrichtung 1 zur Behandlung von Abgasen von Verbrennungsmotoren weist ein Gehäuse 2 auf, in dem sich ein Einsatz 5 befindet, der sich aus zwei Arten von Gestrickschläuchen 13, 14 zusammensetzt. Ein Gestrickschlauch 13 besteht ausschließlich aus Metalldraht, während der andere Gestrickschlauch 14 entweder nur aus Mineralfaser oder überwiegend aus Mineralfaser bestehe. Der aus Metalldraht erzeugte Gestrickschlauch 13 bildet Maschen, die auf der Anströmseite über den Gestrickschlauch 13 aus Mineralfaser überstehen, um zusätzlich Wärme aufzunehmen und in das Innere des Einsatzes 5 weiterzuleiten. Hierdurch ist es möglich, den Einsatz 5 in einem solchen Abstand von dem Auslass des Motors anzuordnen, dass eine Überhitzung im Volllastbereich vermieden wird, während andererseits das Ansprechen des Katalysatormaterials auf dem Einsatz auch im Teillastbereich des Verbrennungsmotors gewährleistet ist.

## Patentansprüche

1. Einrichtung (1) zur Behandlung von Abgasen von Verbrennungsmotoren,
mit einem Gehäuse (2), das einen Abgaseinlass (3) und einen Abgasausiass (4) aufweist,
mit wenigstens einem Gehäuseeinsatz (5), der strömungsmäßig zwischen dem Abgaseinlass (3) und dem Abgasauslass (4) angeordnet ist, wobei
der Gehäuseeinsatz (5) eine dem Abgaseinlass (3) zugekehrte Anströmseite (11) und eine dem Abgasauslass (4) zugekehrte Abströmseite (12) aufweist,
der Gehäuseeinsatz (5) wenigstens eine erste Lage (14) eines textilen Flächengebildes (14) aufweist, die sich zwischen der Anströmseite (11) und der Abströmseite (12) erstreckt, wobei das textile Flächengebilde entweder ein Katalysatormaterial trägt oder Fasern umfasst, an denen sich Ruß niederschlagen und abbrennen kann, und
der Gehäuseeinsatz (5) wenigstens eine zweite Lage (13) eines textilen Flächengebildes (13) aufweist, die sich zwischen der Anströmseite (11) und der Abströmseite (12) erstreckt, die Metalldraht (15) enthält und zumindest an der Anströmseite (11) über die erste Lage (14) übersteht, derart, dass der Abgasstrom im wesentlichen parallel zu den Lagen (13, 14) durch den Gehäuseeinsatz (5) strömt.

2. Einrichtung nach Anspruch 1, **dadurch gekennzeichnet, dass** der Gehäuseeinsatz (5) mehrere erste Lagen (14) und mehrere zweite Lagen (13) aufweist und sich zwischen zwei benachbarten zweiten Lagen (13) mindestens eine erste Lage (14) befindet.

3. Einrichtung nach Anspruch 1, **dadurch gekennzeichnet, dass** die erste und/oder die zweite Lage (13,14) aus einer Maschenware bestehen.

4. Einrichtung nach Anspruch 1, **dadurch gekennzeichnet, dass** die erste und/oder die zweite Lage (13,14) aus einer flachgelegten Maschenschlauchware oder einem gestrickten oder gewirkten Band bestehen, bei denen die Maschenstäbchen (17) in Schlauchlängsrichtung bzw. Bandlängsrichtung liegen.

5. Einrichtung nach Anspruch 2, **dadurch gekennzeichnet, dass** zumindest der überwiegende Teil der ersten Lagen (14), vorzugsweise sämtliche erste Lagen (14) einstückig miteinander verbunden sind.

6. Einrichtung nach Anspruch 2, **dadurch gekennzeichnet, dass** zumindest der überwiegende Teil der zweiten Lagen (13), vorzugsweise sämtliche zweite Lagen (13) einstückig miteinander verbunden sind.

7. Einrichtung nach Anspruch 2, **dadurch gekennzeichnet, dass** die ersten und die zweiten Lagen (13,14) durch eine Leporellofaltung von die jeweiligen textilen Flächengebilde bildenden Ausgangsprodukten (13,14) gebildet sind.

8. Einrichtung nach Anspruch 2, **dadurch gekennzeichnet, dass** die ersten und die zweiten Lagen (13,14) durch gemeinsames Aufrollen von die jeweiligen textilen Flächengebilde bildenden Ausgangsprodukten (13,14) gebildet sind.

9. Einrichtung nach Anspruch 3, **dadurch gekennzeichnet, dass** die Maschenstäbchen (17) rechtwinkelig zu einer Verbindungslinie zwischen Abgaseinlass (3) und Abgasauslass (4) verlaufen.

10. Einrichtung nach Anspruch 1, **dadurch gekennzeichnet, dass** das Material für die erste Lage (14) ausschließlich Mineralfasern ist.

11. Einrichtung nach Anspruch 1, **dadurch gekennzeichnet, dass** das Material für die erste Lage (14) Mineralfasern und Metalldraht ist.

12. Einrichtung nach Anspruch 11, **dadurch gekennzeichnet, dass** zumindest die Mineralfasern mit einem Katalysatormaterial beschichtet sind.

13. Einrichtung nach Anspruch 1, **dadurch gekennzeichnet, dass** das Material für die zweite Lage (13) ausschließlich Metalldraht ist.

14. Einrichtung nach Anspruch 13, **dadurch gekennzeichnet, dass** der Metalldraht mit einem Katalysatormaterial beschichtet ist.

15. Einrichtung nach Anspruch 12 oder 14, **dadurch gekennzeichnet, dass** das Katalysatormaterial als Katalysator für Ruß dient.

16. Einrichtung nach Anspruch 12 oder 14, **dadurch gekennzeichnet, dass** das Katalysatormaterial als Katalysator für NOₓ dient.

17. Einrichtung nach Anspruch 1, **dadurch gekennzeichnet, dass** der Gehäuseeinsatz (5) als Rußfilter wirkt.

18. Einrichtung nach Anspruch 1, **dadurch gekennzeichnet, dass** der Gehäuseeinsatz (5) als Stickoxidkatalysator wirkt.

19. Einrichtung nach Anspruch 1, **dadurch gekennzeichnet, dass** der Gehäuseeinsatz (5) als Feinstpartikelfilter wirkt.

## Claims

1. Device (1) for treating internal combustion engine exhaust gases, with a housing (2), which has an exhaust gas inlet (3) and an exhaust gas outlet (4),
with at least one housing insert (5), which is arranged between the exhaust gas inlet (3) and the exhaust gas outlet (4) with respect to flow, wherein
the housing insert (5) has an approach flow side (11) facing the exhaust gas inlet (3) and a flow-off side (12) facing the exhaust gas outlet (4),
the housing insert (5) has at least one first layer (14) of a textile fabric (14), which extends between the approach flow side (11) and the flow-off side (12), wherein the textile fabric either carries a catalyst material or comprises fibres, on which carbon can be deposited and burned off, and
the housing insert (5) has at least one second layer (13) of a textile fabric (13), which extends between the approach flow side (11) and the flow-off side (12), which contains metal wire (15) and projects over the first layer (14) at least on the approach flow side (11) in such a manner that the exhaust gas stream flows through the housing insert (5) essentially parallel to the layers (13, 14).

2. Device according to Claim 1, **characterised in that** the housing insert (5) has several first layers (14) and several second layers (13), and at least one first layer (14) is located between two adjacent second layers (13).

3. Device according to Claim 1, **characterised in that** the first and/or the second layer (13, 14) are made of a knitted fabric.

4. Device according to Claim 1, **characterised in that** the first and/or the second layer (13, 14) are made of a tubular knitted fabric laid flat or a knitted or woven band, wherein the stitch wales (17) lie in the longitudinal direction of the tube or the longitudinal direction of the band.

5. Device according to Claim 2, **characterised in that** at least the majority of the first layers (14), preferably all the first layers (14), are connected to one another in one piece.

6. Device according to Claim 2, **characterised in that** at least the majority of the second layers (13), preferably all the second layers (13), are connected to one another in one piece.

7. Device according to Claim 2, **characterised in that** the first and the second layers (13, 14) are formed by a concertina-type fold of starting products (13, 14) forming the respective textile fabrics.

8. Device according to Claim 2, **characterised in that** the first and the second layers (13, 14) are formed by the joint roll-up of starting products (13, 14) forming the respective textile fabrics.

9. Device according to Claim 3, **characterised in that** the stitch wales (17) run at right angles to a connecting line between the exhaust gas inlet (3) and the exhaust gas outlet (4).

10. Device according to Claim 1, **characterised in that** the material for the first layer (14) is exclusively mineral fibres.

11. Device according to Claim 1, **characterised in that** the material for the first layer (14) is mineral fibres and metal wire.

12. Device according to Claim 11, **characterised in that** at least the mineral fibres are coated with a catalyst material.

13. Device according to Claim 1, **characterised in that** the material for the second layer (13) is exclusively metal wire.

14. Device according to Claim 13, **characterised in that** the metal wire is coated with a catalyst material.

15. Device according to Claim 12 or 14, **characterised in that** the catalyst material serves as catalyst for carbon.

16. Device according to Claim 12 or 14, **characterised in that** the catalyst material serves as catalyst for NOₓ.

17. Device according to Claim 1, **characterised in that** the housing insert (5) acts as a filter for carbon.

18. Device according to Claim 1, **characterised in that** the housing insert (5) acts as a nitrogen oxide catalyst.

19. Device according to Claim 1, **characterised in that** the housing insert (5) acts as a filter for superfine particles.

## Revendications

1. Dispositif (1) de traitement de gaz d'échappement de moteurs à combustion interne, comprenant un corps (2) présentant une entrée (3) de gaz d'échappement et une sortie (4) de gaz d'échappement, et comprenant au moins une garniture de corps (5) disposée, du point de vue de l'écoulement, entre l'entrée (3) et la sortie (4) de gaz d'échappement, ladite garniture de corps (5) présentant un côté amont (11), tourné vers l'entrée (3) de gaz d'échappement, et un côté aval (12) tourné vers la sortie (4) de gaz d'échappement, la garniture de corps (5) comportant au moins une première couche (14) d'une structure textile plate (14) s'étendant entre le côté amont (11) et le côté aval (12), ladite structure textile plate portant un matériau catalyseur ou comportant des fibres sur lesquelles la suie peut se déposer et brûler, et la garniture de corps (5) comportant au moins une deuxième couche (13) d'une structure textile plate (13) qui s'étend entre le côté amont (11) et le côté aval (12), contient du fil métallique (15) et dépasse, au moins côté amont (11), par rapport à la première couche (14) de manière telle que le flux de gaz d'échappement traverse la garniture de corps (5) de façon sensiblement parallèle aux couches (13, 14).

2. Dispositif selon la revendication 1, **caractérisé en ce que** la garniture de corps (5) comporte plusieurs premières couches (14) et plusieurs deuxièmes couches (13) et qu'au moins une première couche (14) se situe entre deux deuxièmes couches (13) voisines.

3. Dispositif selon la revendication 1, **caractérisé en ce que** la première et/ou la deuxième couche (13, 14) est constituée d'un produit à mailles.

4. Dispositif selon la revendication 1, **caractérisé en ce que** la première et/ou la deuxième couche (13, 14) est constituée d'un produit à mailles tubulaire aplati ou d'une bande tricotée, dans lesquels les colonnettes de mailles (17) s'étendent dans la direction longitudinale du tube ou de la bande.

5. Dispositif selon la revendication 2, **caractérisé en ce qu'**au moins la majeure partie des premières couches (14), de préférence la totalité des premières couches (14), sont liées d'une pièce les unes aux autres.

6. Dispositif selon la revendication 2, **caractérisé en ce qu'**au moins la majeure partie des deuxièmes couches (13), de préférence la totalité des deuxièmes couches (13), sont liées d'une pièce les unes aux autres.

7. Dispositif selon la revendication 2, **caractérisé en ce que** les premières et les deuxièmes couches (13, 14) sont formées par pliage en accordéon de produits de départ (13, 14) constituant les structures textiles plates respectives.

8. Dispositif selon la revendication 2, **caractérisé en ce que** les premières et les deuxièmes couches (13, 14) sont formées par enroulement conjoint de produits de départ (13, 14) constituant les structures textiles plates respectives.

9. Dispositif selon la revendication 3, **caractérisé en ce que** les colonnettes de mailles (17) sont perpendiculaires à une ligne de liaison entre l'entrée (3) de gaz d'échappement et la sortie (4) de gaz d'échappement.

10. Dispositif selon la revendication 1, **caractérisé en ce que** le matériau pour la première couche (14) est constitué exclusivement de fibres minérales.

11. Dispositif selon la revendication 1, **caractérisé en ce que** le matériau pour la première couche (14) est constitué de fibres minérales et de fil métallique.

12. Dispositif selon la revendication 11, **caractérisé en ce qu'**au moins les fibres minérales sont recouvertes d'un matériau catalyseur.

13. Dispositif selon la revendication 1, **caractérisé en ce que** le matériau pour la deuxième couche (13) est constitué exclusivement de fil métallique.

14. Dispositif selon la revendication 13, **caractérisé en ce que** le fil métallique est recouvert d'un matériau catalyseur.

15. Dispositif selon la revendication 12 ou 14, **caractérisé en ce que** le matériau catalyseur sert de catalyseur pour la suie.

16. Dispositif selon la revendication 12 ou 14, **caractérisé en ce que** le matériau catalyseur sert de catalyseur pour le NOₓ.

17. Dispositif selon la revendication 1, **caractérisé en ce que** la garniture de corps (5) sert de filtre à suie.

18. Dispositif selon la revendication 1, **caractérisé en ce que** la garniture de corps (5) agit comme catalyseur de l'oxyde d'azote.

19. Dispositif selon la revendication 1, **caractérisé en ce que** la garniture de corps (5) agit comme filtre à particules très fines.
